(19) Europäisches Patentamt
European Patent Office
Office européen des brevets

(11) Numéro de publication: **0 176 443**
**B1**

(12) # FASCICULE DE BREVET EUROPÉEN

(45) Date de publication du fascicule du brevet: **02.08.89**

(51) Int. Cl.⁴: **D 21 C 11/04**, C 01 D 1/22, C 01 F 11/18, C 09 C 1/02, D 21 H 1/22

(21) Numéro de dépôt: **85401843.9**

(22) Date de dépôt: **23.09.85**

(54) **Procédé permettant la valorisation des boues de chaux dans le cycle de caustification du procédé kraft.**

(30) Priorité: **25.09.84 FR 8414657**

(43) Date de publication de la demande: **02.04.86 Bulletin 86/14**

(45) Mention de la délivrance du brevet: **02.08.89 Bulletin 89/31**

(84) Etats contractants désignés: **AT BE CH DE FR GB IT LI NL SE**

(56) Documents cité:
**EP-A-0 125 163**
**FR-A-2 020 771**
**US-A-1 587 679**
**US-A-1 894 620**
**US-A-2 062 255**
**US-A-2 211 908**
**US-A-3 268 388**

(73) Titulaire: **PAPETERIES DE CONDAT, 41 rue Ybry, F-92523 Neuilly Sur Seine (FR)**

(72) Inventeur: **Raoux, Henriette, 20 Rue de Pressensé, F-33110 Le Bouscat (FR)**
Inventeur: **Langlade, Pierre, 1 Allée Ganda, F-33200 Bordeaux (FR)**

(74) Mandataire: **Muller, René, SAINT- GOBAIN RECHERCHE 39, quai Lucien Lefranc, F-93304 Aubervilliers (FR)**

EP 0 176 443 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un nouveau procédé permettant de valoriser les boues de chaux dans le cycle de la caustification pour la préparation de pâtes kraft, ce procédé permettant la récupération d'un carbonate de calcium utilisable notamment en tant que charge et pigment, en particulier comme pigment de couchage pour le papier.

Le procédé kraft de cuisson des bois dans la papeterie utilise des produits chimiques qui sont généralement récupérés ou recyclés. Ainsi, la combustion des liqueurs noires fournit le salin constitué notamment de sulfure de sodium $Na_2S$ et de carbonate de sodium $Na_2CO_3$ qui par dissolution à l'eau, généralement les eaux de lavage, constitue la liqueur verte. Au cours de la caustification, c'est-à-dire la transformation de la liqueur verte en liqueur blanche, il se forme en même temps un précipité de carbonate de calcium. Lorsque la papeterie dispose d'un four à chaux, ce carbonate de calcium $CaCO_3$ est décarbonaté afin de régénérer la chaux qui est à nouveau utilisée pour la caustification. Mais lorsque la papeterie ne dispose pas d'un four à chaux, les boues de carbonate de calcium sont rejetées sous forme de déchets.

Par ailleurs, le carbonate de calcium est un produit largement utilisé en tant que pigment dans les compositions de couchage employées pour la fabrication des papiers couchés, et l'idée de récupérer le carbonate de calcium issu de la caustification a déjà été émise, le carbonate de calcium récupéré pouvant bien entendu être aussi utilisé dans d'autres industries telles que celles des peintures, des matières plastiques, etc... Mais jusqu'à présent elle n'a pas été réalisée car le carbonate de calcium récupéré à partir des boues de caustification présente une couleur gris-verdâtre et non pas un blanc nécessaire à une application en tant que pigment de couchage. La coloration gris-verdâtre serait due essentiellement à la présence de carbone et de sels ferreux qui ne peuvent être éliminés des boues du carbonate de calcium.

D'autre part la granulométrie des carbonates de calcium ainsi récupérés est beaucoup trop élévée pour cette application.

Le cycle de caustification couramment utilisé comprend une dissolution du salin constitué principalement de sulfure de sodium et de carbonate de sodium par toute l'eau de lavage des carbonates de calcium, à la suite de quoi la liqueur verte obtenue est utilisée pour l'extinction de la chaux et la caustification proprement dite qui s'effectue selon la réaction chimique suivante:

$$Ca(OH)_2 + Na_2CO_3 \rightarrow CaCO_3 + 2NaOH$$

Après décantation ou après tout procédé permettant la séparation liqueur blanche-matières solides, la majeure partie de la liqueur blanche formée de la soude et du sulfure de sodium est filtrée pour être utilisée pour la cuisson des bois selon le procédé kraft. Les matières solides quant à elles sont lavées afin de récupérer la partie restante de la liqueur blanche qui est recyclée sous forme de liqueur blanche faible et il reste des boues de teinte gris-verdâtre contenant du carbonate de calcium qui peut être soit décarbonaté, soit rejeté sous forme de déchets inutilisables comme indiqué précédemment.

On a déjà essayé de produire des pigments utilisables conjointement au traitement des liqueurs dans le procédé de caustification par modification des conditions de caustification. On peut citer par exemple les brevets US-3 268 388, US-2 211 908, US-1 894 620, US-1 587 679 et US-2 062 255. Mais les conditions opératoires ou encore les produits obtenus ne sont pas entièrement satisfaisants.

On connait encore d'après le document EP-A-0 125 163 (priorité 18.4.83; dépôt 18.4.84; publication 14.11.84) un procédé amélioré de traitement des liqueurs qui conduit à l'obtention d'une haute qualité de carbonate de calcium. Un inconvénient de ce procédé est qu'il nécessite des modifications importantes des conditions opératoires industrielles.

L'invention propose un nouveau procédé pour la valorisation des boues de chaux dans le cycle de la caustification pour la préparation des pâtes kraft permettant la récupération d'un carbonate de calcium ayant la blancheur et la granulomètrie le rendant apte à une utilisation en tant que pigment de couchage pour le papier.

Le demandeur s'est aperçu que la blancheur du carbonate de calcium produit au cours de la réaction de caustification de la liqueur verte dans le procédé au sulfate de fabrication de la pâte kraft est lié essentiellement à deux processus:

- La liqueur verte, provenant de la dissolution du salin par les petites eaux, contient des impuretés noires et, en particulier, du carbone provenant de la combustion imparfaite de la liqueur noire. Ces impuretés adhèrent au carbonate de calcium qui se produit au cours de la réaction de caustification et fait chuter de façon importante sa blancheur. Il est donc absolument nécessaire de faire une filtration parfaite de la liqueur verte si on veut obtenir des carbonates blancs.
- Le deuxième processus est plus complexe; il est lié à la pureté de la chaux utilisée et tout particulièrement à sa teneur en oxyde de fer $Fe_2O_3$ qui, en présence de sulfure de sodium $Na_2S$ contenu dans la liqueur verte, est réduit sous forme d'ions ferreux.

Ces ions ferreux sont plus ou moins nombreux et dépendent du taux de fer apporté essentiellement par la chaux et d'autre part du taux de sulfure de sodium de la liqueur verte qui peut varier dans une certaine fourchette.

Ils conduisent à une coloration verte plus ou moins intense, très caractéristique des boues de

caustification. Cette coloration verte s'atténue ou disparait au fur et à mesure que les ions ferreux se transforment en ions ferriques par oxydation. Cette oxydation se produit plus ou moins vite en fonction par exemple de l'oxygène dissout apporté par les eaux de lavage du carbonate de calcium.

Il peut être intéressant d'accélérer cette oxydation par l'action d'un agent oxydant tel que le péroxyde d'hydrogène $H_2$ $O_2$ ou l'eau de javel NaOCl. Toutefois, il est nécessaire que tous les ions ferreux soient accessibles à ces agents oxydants et la taille des grains formés au cours de la réaction de caustification intervient alors:

Si les grains sont trop gros, tous les ions ferreux ne sont pas transformés en ions ferriques, seuls ceux accessibles à la surface ou près de la surface des grains de carbonate réagissent. Il reste alors toujours une teinte verte plus ou moins accentuée. La blancheur augmente, mais reste à des niveaux inférieurs à celle obtenue à partir de grains très fins avec la conversion totale de sels ferreux en sels ferriques.

En résumé, le demandeur a montré que pour la même chaux vive et pour la même liqueur verte, la blancheur du carbonate de calcium, produit après lavage et action d'un agent oxydant, est reliée à sa granulométrie si tous les ions ferreux n'ont pas été atteints et oxydés.

L'invention propose donc un procédé permettant d'obtenir un carbonate de calcium, de granulométrie désirée, apte à une utilisation en tant que pigment de couchage pour le papier, ce procédé comprenant les opérations suivantes:

dissolution du salin par de la liqueur blanche faible provenant du lavage du carbonate de calcium, conduisant à la liqueur verte,
- filtration de la liqueur verte obtenue par tous moyens appropriés: par exemple par décantation statique suivie d'une filtration de polissage, par centrifugation, ou filtration sur précouche, la filtration s'opérant à une température supérieure à environ 80°C, et de préférence supérieure à 90°C pour éviter des pertes thermiques et aussi pour faciliter l'opération elle-même,
- extinction d'une chaux vive dans la liqueur verte filtrée, sous agitation, à une température de l'ordre de 100°C, ce qui donne un lait de chaux éteinte,
- élimination des incuits,
- caustification classique,
- le cas échéant coupure granulométrique du carbonate de calcium dans la liqueur blanche à un seuil de 40 µm environ,
- séparation de la liqueur blanche du carbonate de calcium par tous moyens appropriés tels que filtre sous vide, filtre à bougies, ou décantation,
- lavage du précipité, c'est-à-dire du carbonate de calcium par tous moyens appropriés avec de l'eau chaude, de préférence à une température comprise entre 80°C et 100°C, et recyclage de la liqueur blanche faible pour la dissolution du salin,
- concentration à une siccité suffisante permettant un broyage, généralement de l'ordre de 72 à 74 % environ si on broie avec un dispersant, ou inférieure à 60 % environ si on broie sans dispersant,
- incorporation d'un dispersant et malaxage du carbonate de calcium avec le dispersant si la voie dispersant est retenue,
- broyage du carbonate de calcium dans au moins un broyeur à billes, et de préférence dans au moins deux broyeurs à billes successifs,
- blanchiment par action d'agents oxydants et notamment du peroxyde d'hydrogène, la mise en présence de l'agent oxydant et du carbonate de calcium pouvant se faire soit dans le malaxeur, soit dans le broyeur, soit après broyage.

Le procédé selon l'invention permet de dissocier et par là d'optimiser et réguler les deux productions, d'une part celle de la liqueur blanche pour la cuisson du bois, d'autre part celle du carbonate de calcium pour le couchage du papier ou les autres utilisations envisagées.

Avantageusement, la chaux vive est sélectionnée en fonction de sa pureté et en particulier de sa teneur en oxyde de fer suivant la blancheur finale désirée. Ainsi pour l'obtention d'une blancheur très élevée, par exemple supérieure à 90 (suivant la norme T 12030 "détermination du degré de blancheur ISO des pâtes"), on choisira une chaux à faible teneur en oxyde de fer, par exemple inférieure à 0,15 % en poids. Pour l'obtention de blancheur de l'ordre de 85 à 90, on pourra utiliser des chaux ayant des teneurs en oxyde de fer inférieures à 0,25 %.

Selon la chaux utilisée, le procédé selon l'invention utilise une coupure granulométrique, à environ 40 µm. En fait, une partie importante des grains ayant une granulométrie supérieure à 40 µm provient des incuits de la chaux. Or dans les extincteurs, un râteau permet d'éliminer ces incuits, avant l'envoi vers les caustifieurs du mélange de la chaux éteinte et de la liqueur verte. De sorte que pour certaines chaux, après élimination des incuits, la quasi totalité du carbonate de calcium produit étant inférieur à 40 µm, la coupure granulométrique n'est pas nécessaire.

Des exemples de réalisation du procédé selon l'invention sont décrits ci-après en relation avec la figure 1 qui représente les étapes successives du procédé.

**Exemple 1**

Les débits indiqués correspondent à une production horaire moyenne d'environ 8,2 tonnes de pâte blanchie par le procédé kraft.

A la case A, le salin 1 constitué essentiellement

de $Na_2CO_3$ et $Na_2S$ est dissous par 38 $m^3$/h de liqueur blanche faible 2 recyclée, provenant du lavage du carbonate de calcium. On forme ainsi la liqueur verte 3 à une température d'environ 95°C. La liqueur verte est filtrée à la case B à une température de 95°C afin d'éliminer des impuretés 4 solides à cette température, telles du carbone et une partie des sels de fer qui se trouvent sous forme ferreux. A la case C, on réalise l'extinction de 2,54 tonnes/heure de chaux vive CaO à 90 % 5 et contenant 0,15 % de $Fe_2O_3$ dans la liqueur verte, l'extinction s'effectuant à 100°C par apport de vapeur 6. Après élimination des incuits 7, on effectue la caustification en case D selon la réaction

$$Ca(OH)_2 + Na_2CO_3 \rightarrow CaCO_3 + 2\,NaOH$$

Le mélange de carbonate de calcium 8 et de la liqueur blanche 9 est envoyé en case E où on effectue une coupure granulométrique du carbonate de calcium afin d'éliminer les grains 10 supérieurs à 40 µm. On sépare ensuite la liqueur blanche forte du carbonate de calcium en case F par filtration sous vide ou par décantation. La liqueur blanche forte 9 est récupérée pour être utilisée pour la cuisson du bois alors que le précipité comprenant le carbonate de calcium 8 et une partie restante de la liqueur blanche forte sont lavés en case G, avec 38 $m^3$ d'eau 11 à 80°C environ. Le liquide récupéré constitue la liqueur blanche faible 2 qui est recyclée pour la dissolution du salin 1 en case A. La partie correspondant au carbonate de calcium 8 est ensuite concentrée en case H jusqu'à une siccité de 72 % environ. En case 1 on introduit un dispersant 12 par exemple un polyacrylate ou un polyphosphate de sodium, on introduit également en case 1 un agent de blanchiment 13, ici un agent oxydant, notamment du peroxyde d'hydrogène $H_2O_2$, et on malaxe l'ensemble pour bien le mélanger.

La composition est ensuite introduite en case J, ou elle subit un broyage humide successivement dans deux broyeurs à billes, les billes étant en zircone. On utilise par exemple des broyeurs connus pour le broyage des pigments de peinture.

On obtient 3,6 tonnes/heure d'un slurry 14 de carbonate de calcium, 90 % des grains du carbonate présentant une granulométrie inférieure à 2 µm avec 50 % inférieure à 1 µm, d'une blancheur 92 déterminée selon la norme T 12030 "détermination du degré de blancheur ISO des pâtes".

Ce slurry contient des carbonates de calcium qui peuvent être utilisés pour le couchage du papier.

**Exemples 2 et 3**

On opère de la même façon que dans l'exemple 1 sauf qu'on introduit l'agent de blanchiment dans le broyeur ou après broyage, respectivement. Ces modifications ne changent pas les caractéristiques du carbonate de calcium récupéré qui présente l'aptitude nécessaire à une utilisation pour le couchage du papier.

**Exemple 4**

On opère de la même façon que dans l'exemple 1 sauf que la concentration qui est effectuée en case H est limitée pour atteindre une siccité d'environ 60 %. La composition est ensuite envoyée directement en case J pour subir un broyage humide sans dispersant. Le slurry récupéré après blanchiment contient des carbonates de calcium utilisables notamment comme pigments pour la peinture après séchage.

**Revendications**

1. Procédé pour la valorisation des boues de chaux dans le cycle de la caustification pour la préparation des pâtes kraft, permettant la récupération d'un carbonate de calcium utilisable notamment en tant que pigments de couchage pour le papier, comprenant les opérations suivantes:

- dissolution du salin par de la liqueur blanche faible provenant du lavage du carbonate de calcium, conduisant à une liqueur verte,
- extinction de la chaux vive,
- caustification,
- séparation de la liqueur blanche forte du précipité contenant le carbonate de calcium,
- lavage du précipité par de l'eau,
- recyclage de la liqueur blanche faible,
- blanchiment par action d'au moins un agent oxydant,

caractérisé en ce que:

- on filtre la liqueur verte à une température supérieure à 80°C,
- on réalise l'extinction de la chaux vive dans la liqueur verte, à une température de l'ordre de 100°C,
- on élimine les incuits avant la caustification,
- on effectue une coupure granulométrique du carbonate de calcium dans la liqueur blanche, à un seuil de 40 µm environ, si nécessaire, après la caustification,
- on lave le précipité contenant le carbonate de sodium par de l'eau chaude, de préférence à une température comprise entre 80°C et 100°C,
- on broie le carbonate de calcium dans au moins un broyeur à billes,
- l'agent oxydant pour le blanchiment est mis en présence du carbonate de calcium avant, pendant ou après le broyage.

2. Procédé selon la revendication 1, caractérisé en ce qu'on concentre le précipité du carbonate de calcium après lavage, jusqu'à une siccité d'environ 72 à 74 %, qu'on introduit un dispersant et qu'on malaxe l'ensemble avant le broyage.

3. Procédé selon une des revendications 1 à 2, caractérisé en ce que l'agent oxydant est le peroxyde d'hydrogène.

4. Procédé selon une des revendications 1 à 3, caractérisé en ce que la filtration de la liqueur verte s'effectue à une température supérieure à 90° C.

5. Procédé selon une des revendications 1 à 4, caractérisé en ce que les billes du broyeur sont en zircone.

6. Procédé selon une des revendications 1 à 5, caractérisé en ce que le broyage est effectué dans au moins deux broyeurs successifs.

7. Procédé selon une des revendications 1 ou 3 à 6, caractérisé en ce qu'on concentre le précipité après lavage jusqu'à une siccité d'environ 60 % sans dispersant, le carbonate après broyage pouvant être utilisé après séchage comme pigment pour la peinture.

**Patentansprüche**

1. Verfahren zur Verwertung von Kalkschlamm in einem Kaustifizierzyklus zur Herstellung von Kraftzellstoff, das die Wiederverwendung von Calciumcarbonat, das insbesondere als Pigmente zur Beschichtung von Papier verwendbar ist, ermöglicht und folgende Arbeitsschritte umfaßt:

- Auflösen von Salzlauge mit Hilfe einer durch Spülung des Calciumcarbonats entstandenen schwachen weißen Lösung, so daß eine grüne Lösung entsteht,
- Löschen des ungelöschten Kalks,
- Kaustifizieren,
- Absondern der starken weißen Lösung von dem Bodensatz, der das Calciumcarbonat enthält,
- Spülen des Bodensatzes mit Wasser,
- Rückführung der schwachen weißen Lösung,
- Bleichen mit Hilfe wenigstens eines Oxidationsmittels,

dadurch gekennzeichnet, daß

- die grüne Lösung bei einer Temperatur von mehr als 80° C gefiltert wird,
- der ungelöschte Kalk in der grünen Lösung bei einer Temperatur von etwa 100° C gelöscht wird,
- die ungebrannten Reste vor dem Kaustifizieren entfernt werden,
- ein Schnitt bei der Korngröße des Calciumcarbonats in der weißen Lösung bei einer Schwelle von etwa 40 µm erforderlichenfalls nach dem Kaustifizieren gemacht wird,
- der Bodensatz, der das Natriumcarbonat enthält, mit heißem Wasser, vorzugsweise bei einer Temperatur zwischen 80° C und 100° C, gespült wird,
- das Calciumcarbonat in wenigstens einer Kugelmühle zerrieben wird,
- das Oxidationsmittel zum Bleichen in Gegenwart des Calciumcarbonats vor, während oder nach dem Zerkleinern zugesetzt wird.

2. Verfahren nach Anspruch 1, dadurch gekennzeichnet, daß der Calciumcarbonatbodensatz nach dem Spülen konzentriert wird, bis eine Trockenheit von 72 bis 74 % erreicht ist, daß ferner ein Dispersionsmittel zugesetzt und das Ganze vor dem Zerreiben durchknetet wird.

3. Verfahren nach Anspruch 1 oder 2, dadurch gekennzeichnet, daß das Oxidationsmittel Wasserstoffperoxid ist.

4. Verfahren nach einem der Ansprüche 1 bis 3, dadurch gekennzeichnet, daß das Filtern der grünen Lösung bei einer Temperatur von mehr als 90° C erfolgt.

5. Verfahren nach einem der Ansprüche 1 bis 4, dadurch gekennzeichnet, daß die Kügelchen der Kugelmühle aus Zirkondioxid bestehen.

6. Verfahren nach einem der Ansprüche 1 bis 5, dadurch gekennzeichnet, daß das Zerreiben in wenigstens zwei aufeinanderfolgenden Kugelmühlen erfolgt.

7. Verfahren nach einem der Ansprüche 1 oder 3 bis 6, dadurch gekennzeichnet, daß der Bodensatz nach Spülung bis zu einer Trockenheit von etwa 60 % ohne Dispersionsmittel konzentriert wird, wobei das Carbonat nach dem Zerreiben und nach dem Trocknen als Pigment für die Malerei verwendet werden kann.

**Claims**

1. Process for the valorization of size slime in the causticization cycle for the preparation of Kraft pastes making it possible to recover a calcium carbonate more particularly usable as a paper couching pigment and comprising the operations of dissolving the salin by the weak white liquor resulting from the washing of the calcium carbonate, which leads to a green liquor, slaking of the quicklime, causticization, separation of the strong white liquor from the precipitate containing the calcium carbonate, washing the precipitate with water, recycling the weak white liquor and bleaching by the action of at least one oxidizing agent, characterized in that the green liquor is filtered at a temperature above 80° C, the quicklime is slaked in the green liquor at a temperature of approximately 100° C, the unboiled substances are eliminated prior to causticization, a granulometric fraction of the calcium carbonate in the white liquor, at a threshold of approximately 40 µm, is carried out, if necessary, following causticization, the precipitate containing the sodium carbonate is washed with hot water, preferably at a temperature between 80 and 100° C, the calcium carbonate is ground in at least one ball mill and the oxidizing agent for the bleaching is brought into the presence of the calcium carbonate before, during or after grinding.

2. Process according to claim 1, characterized in that the calcium carbonate precipitate is concentrated after washing to a dryness of approximately 72 to 74 %, a dispersant is introduced and mixing takes place before grinding.

3. Process according to either of the claims 1

and 2, characterized in that the oxidizing agent is hydrogen peroxide.

4. Process according to one of the claims 1 to 3, characterized in that the filtration of the green liquor takes place at a temperature above 90° C.

5. Process according to one of the claims 1 to 4, characterized in that the ball of the mill are made from zirconia.

6. Process according to one of the claims 1 to 5, characterized in that grinding takes place in at least two successive mills.

7. Process according to one of the claims 1 or 3 to 6, characterized in that the precipitate is concentrated after washing to a dryness of approximately 60 % without dispersant, the carbonate being usable after grinding and drying as a paint pigment.

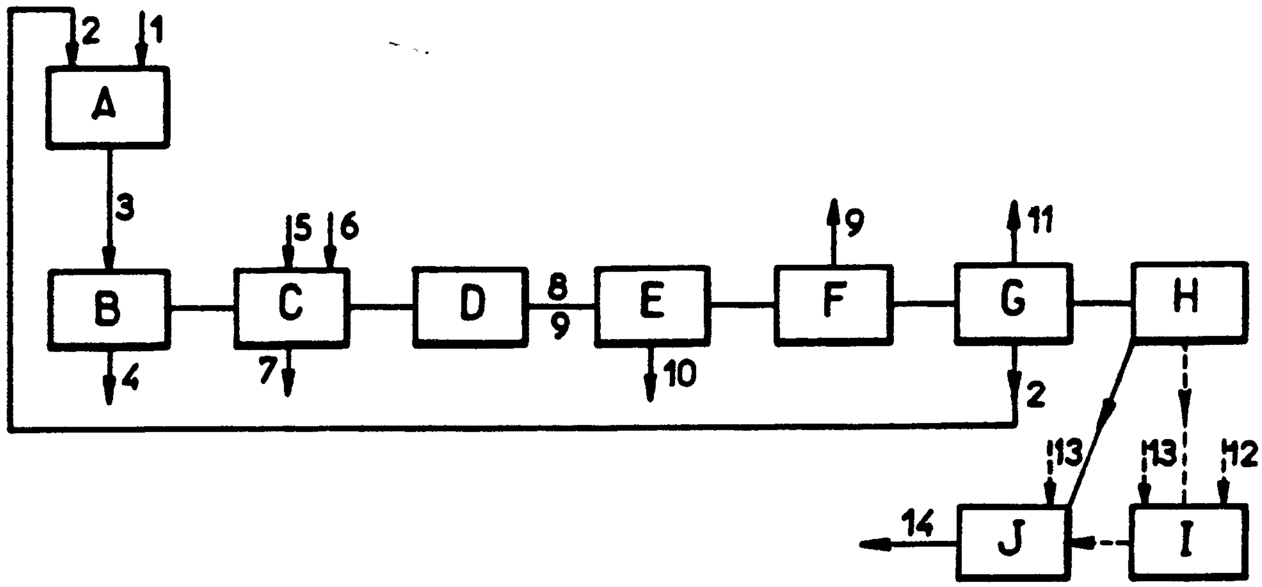


FIG_1